# EUROPÄISCHE PATENTSCHRIFT

(11) **EP 3 478 521 B1**
(45) Veröffentlichungstag und Bekanntmachung des Hinweises auf die Patenterteilung: **13.05.2020**
(21) Anmeldenummer: 17737751.2
(22) Anmeldetag: 30.06.2017
(51) Int. Cl.: B60J 1/20

(54) **BESCHATTUNGSVORRICHTUNG FÜR EINE SCHEIBE EINES KRAFTFAHRZEUGS**
SHADING DEVICE FOR A WINDOW OF A MOTOR VEHICLE
DISPOSITIF D'OMBRAGE POUR UNE VITRE DE VÉHICULE AUTOMOBILE

(30) Priorität: 04.07.2016 DE 102016212165
(43) Veröffentlichungstag der Anmeldung: 08.05.2019
(73) Patentinhaber: BOS GmbH & Co. KG, 73760 Ostfildern (DE)
(72) Erfinder: MARZINKE, Timo, 73760 Ostfildern (DE); JONAS, Bernd, 71116 Rohrau (DE); ELLEDER, Dietmar, 70825 Korntal-Münchingen (DE); BUCUR, Adrian, 73730 Esslingen (DE); MAIER, Matthias, 73733 Esslingen (DE); MOLNAR, György, 72138 Kirchentellinsfurt (DE); HILBERT, Jürgen, 73760 Ostfildern (DE)
(74) Vertreter: Patentanwälte Ruff, Wilhelm, Beier, Dauster & Partner mbB
(86) Internationale Anmeldenummer: PCT/EP2017/066381
(87) Internationale Veröffentlichungsnummer: WO 2018/007266

(56) Entgegenhaltungen:
- DE-A1-102013 006 761
- DE-A1-102014 118 294

## Beschreibung

Die Erfindung betrifft eine Beschattungsvorrichtung für eine Scheibe eines Kraftfahrzeugs mit einem flexiblen Beschattungsgebilde, das auf einer Wickelwelle auf- und abwickelbar gehalten ist, die in einem fahrzeugfesten Aufnahmebereich angeordnet ist, dem ein Durchtritt zugeordnet ist, durch den hindurch das flexible Beschattungsgebilde in eine Beschattungsposition ausziehbar oder in eine Ruheposition aufwickelbar ist, wobei der Durchtritt durch ein schwenkbeweglich gelagertes Schließteil verschließbar oder freigebbar ist, wobei das Beschattungsgebilde an seinem in Auszugrichtung vorderen Stirnendbereich mit einem formstabilen Auszugprofil versehen ist, das mit Hilfe wenigstens eines Antriebsübertragungsmittels eines Antriebssystems entlang der Scheibe verfahrbar ist, um das Beschattungsgebilde zwischen der Ruheposition und der Beschattungsposition zu verlagern, und wobei das Schließteil mittels einer Steuermechanik zwischen einer Schließstellung und wenigstens einer Öffnungsstellung abhängig von einer Verfahrbewegung des Auszugprofils zwangsgesteuert ist.

Eine derartige Beschattungsvorrichtung für eine Scheibe eines Kraftfahrzeuges ist aus DE 10 2013 006 761 A1 bekannt. Die bekannte Beschattungsvorrichtung ist im Bereich einer Seitenscheibe einer Seitentür des Kraftfahrzeugs angeordnet. Ein flexibles Beschattungsgebilde in Form einer Rollobahn ist auf einer Wickelwelle auf- und abwickelbar gehalten, die in einer Rollokassette drehbar gelagert ist. Die Rollokassette ist unterhalb einer Türbrüstung der Seitentür an der Seitentür befestigt. Die Rollokassette ist in Fahrzeughochrichtung nach oben mit einem Durchtritt versehen, der eine Öffnung für das Hindurchtreten der Rollobahn bildet. Die Rollobahn weist an ihrem in Auszugrichtung vorderen Stirnendbereich ein formstabiles Auszugprofil auf, das in Fahrzeughochrichtung entlang der Seitenscheibe verlagerbar ist. Hierzu sind beiden gegenüberliegenden Stirnseiten des Auszugprofils Antriebsübertragungsstränge zugeordnet, die in seitlichen Führungsprofilen der Seitenscheibe geführt sind. Die Antriebsübertragungsstränge werden durch einen elektrischen Antriebsmotor angetrieben. Der Durchtritt, durch den das Auszugprofil und das Beschattungsgebilde nach oben oder nach unten hindurchbewegt werden, ist im Bereich der Türbrüstung durch ein schwenkbewegliches Schließteil verschließbar, das in der Ruhestellung des Auszugprofils und des Beschattungsgebildes geschlossen ist. Für einen Ausfahrvorgang des Auszugprofils und des Beschattungsgebildes wird das Schließteil in seine Öffnungsstellung aufgeschwenkt. Sobald das Auszugprofil und die Rollobahn, d. h. das Beschattungsgebilde, in ihre Beschattungsstellung im Bereich der Seitenscheibe nach oben verfahren sind, wird das Schließteil in eine Zwischenstellung zurückgeschwenkt, in der ein teilweises Überdecken des Durchtrittes erreicht ist. Zur Verlagerung des Schließteiles zwischen der Schließstellung, der Öffnungsstellung und der Zwischenstellung ist eine Steuerkinematik vorgesehen, die unterschiedlich ausgebildet sein kann. Dabei wirkt die Steuerkinematik abhängig von einer Verlagerungsbewegung der Antriebsübertragungsstränge auf das Schließteil ein. Die Steuerkinematik kann eine Bowdenzugeinrichtung oder eine Seilzugeinrichtung aufweisen. Ferner ist eine Beschattungsvorrichtung gemäß dem Oberbegriff von Anspruch 1 aus DE 10 2014 118 294 A1 bekannt.

Aufgabe der Erfindung ist es, eine Beschattungsvorrichtung der eingangs genannten Art zu schaffen, die ein einfaches und funktionssicheres Verschwenken des Schließteiles ermöglicht.

Diese Aufgabe wird dadurch gelöst, dass die Steuermechanik eine von dem Antriebssystem abgeleitete Steuerkinematik aufweist, die eine drehbare Exzenterscheibe aufweist, die mit dem Schließteil in Wirkverbindung ist, und die an ihrem Außenumfang mit unterschiedlichen Steuerkonturen zur Abbildung der Schließstellung und der wenigstens einen Öffnungsstellung des Schließteils abhängig von einer Drehstellung des Exzenterscheibe versehen ist. Die erfindungsgemäße Beschattungsvorrichtung ist in vorteilhafter Weise für eine Scheibe eines Personenkraftwagens einsetzbar, insbesondere für eine Seitenscheibe eines Fondbereichs des Personenkraftwagens. Die erfindungsgemäße Lösung ermöglicht einen besonders einfachen und funktionssicheren Aufbau der Steuermechanik. Durch eine einfache Drehbewegung der Exzenterscheibe erfolgt die gewünschte Ansteuerung des Schließteiles. Die entsprechenden Steuerkonturen der Exzenterscheibe können entweder direkt auf einen am Schließteil fest angeordneten Fortsatz wirken, oder aber auf ein bewegliches, formstabiles Übertragungselement, insbesondere in Form eines Steuerschiebers, einwirken, das entsprechende Drehbewegungen der Exzenterscheiben auf das Schließteil überträgt. Die Steuerkonturen der Exzenterscheibe können auch nach Art von Kulissenführungen oder Nutführungen ausgeführt sein, in denen ein entsprechender Gleitstein beweglich ist, der mit dem Übertragungselement oder dem Schließteil verbunden ist. Die unterschiedlichen Steuerkonturen schließen in Umfangsrichtung der Exzenterscheibe aneinander an. Unter dem Außenumfang ist sowohl eine außenliegende Randkontur der Exzenterscheibe als auch eine Umfangsspur zu verstehen, die durch eine entsprechende Nut- oder Kulissenführung in radialem Abstand außerhalb einer Drehachse der Exzenterscheibe, aber radial innerhalb der außenliegenden Randkontur der Exzenterscheibe angeordnet ist, wobei drei unterschiedliche Steuerkonturen (9a bis 9c) vorgesehen sind, wobei eine erste Steuerkontur (9a) der Schließstellung, eine zweite Steuerkontur (9c) einer vollständigen Öffnungsstellung und eine weitere Steuerkontur (9b) einer teilweisen Öffnungsstellung des Schließteils (5) entsprechen.

In Ausgestaltung der Erfindung ist die Exzenterscheibe mittels eines Schneckentriebs mit einer Übertragungswelle des Antriebssystems verbunden. Als Übertragungswelle ist vorzugsweise eine koaxial zu einer Wickelwelle oder zu einer Synchronwelle ausgerichtete und drehschlüssig mit der Wickelwelle oder der Synchronwelle verbundene Welle des Antriebssystems vorgesehen. Eine Synchronwelle des Antriebssystems ist vorgesehen, wenn das Auszugprofil auf seinen gegenüberliegenden Stirnseiten mittels jeweils eines Antriebsübertragungsstranges zwischen seiner Ruhestellung und seiner Beschattungsstellung verlagert wird. Als Antriebsübertragungsstränge sind insbesondere flexible Gewindesteigungskabel oder flexible Zahnstangen vorgesehen. Die Synchronwelle weist im Bereich jedes Antriebsübertragungsstranges jeweils ein geeignetes Zahnrad auf, das mit dem entsprechenden Antriebsübertragungsstrang kämmt und so eine synchrone Antriebsübertragung auf die beiden Antriebsübertragungsstränge ausübt. Die synchrone Antriebsübertragung gewährleistet eine gleichmäßige Parallelverlagerung des Auszugprofils und damit ein gleichmäßiges Ausziehen oder Einfahren des Beschattungsgebildes. Die Synchronwelle wiederum wird durch ein Getriebe eines Antriebsmotors des Antriebssystems angetrieben. Der Antriebsmotor ist in vorteilhafter Weise elektrisch ausgeführt.

In weiterer Ausgestaltung der Erfindung ist das Schließteil mittels einer Federeinheit permanent in Schließrichtung drehmomentbeaufschlagt. Die Federeinheit ist vorzugsweise im Bereich der Schwenkachse des Schließteiles angeordnet und wird vorteilhaft durch wenigstens eine Schenkelfeder gebildet. Bei mehreren Schenkelfedern sind die Schenkelfedern in gleichmäßigen Abständen über die Länge der Schwenkachse des Schließteiles verteilt angeordnet.

In weiterer Ausgestaltung der Erfindung treibt das Antriebssystem die Wickelwelle und das wenigstens eine Antriebsübertragungsmittel für das Auszugprofil an. Falls nur ein einzelnes Antriebsübertragungsmittel vorgesehen ist, ist vorzugsweise ein mittig am Auszugprofil angreifender, formsteifer Tragstab vorgesehen, der im Bereich der Antriebsübertragung als Zahnstange ausgeführt ist. Falls zwei flexible Antriebsübertragungsstränge vorgesehen sind, die zug- und drucksteif ausgeführt sind, werden die Antriebsübertragungsmittel vorzugsweise synchron zu einer Antriebsübertragung der Wickelwelle angetrieben. Die Wickelwelle selbst ist bei der Ausgestaltung ebenfalls durch ein entsprechendes Getriebe des Antriebssystems in beiden Richtungen, d. h. in Auszugrichtung und in Aufwickelrichtung des Beschattungsgebildes, angetrieben.

In weiterer Ausgestaltung der Erfindung greift die Exzenterscheibe an einem mit dem Schließteil verbundenen Hebelfortsatz an. Dadurch wird die Steuerkinematik relativ nahe an dem Schließteil positioniert, wodurch sich eine besonders platzsparende Anordnung der Steuerkinematik ergibt. Die Bewegung der Exzenterscheibe ist an eine Aus- oder Einfahrbewegung des flexiblen Flächengebildes gekoppelt. Vorzugsweise führt die Exzenterscheibe maximal eine einzige Umdrehung durch zwischen einer eingefahrenen und einer vollständig ausgezogenen Endlage des flexiblen Flächengebildes und damit des zugehörigen Auszugprofils.

In weiterer Ausgestaltung der Erfindung ist der Hebelfortsatz mit dem Schließteil mittels einer Überlastsicherung verbunden. Dadurch können Beschädigungen des Antriebssystems oder der Steuermechanik vermieden werden, falls auf das Schließteil in einer geöffneten Funktionsstellung eine externe Kraft ausgeübt wird, insbesondere durch unbeabsichtigtes Auflegen eines Ellbogens eines Fahrzeuginsassen auf das Schließteil.

In weiterer Ausgestaltung der Erfindung ist der Hebelfortsatz relativ zu dem Schließteil koaxial zu der Schwenkachse des Schließteiles begrenzt schwenkbeweglich gelagert, und es ist eine Federeinrichtung vorgesehen, die den Hebelfortsatz relativ zu dem Schließteil in einer definierten Funktionslage sichert. Die Federeinrichtung ist vorzugsweise als Druckfeder gestaltet und entweder koaxial zu der Schwenkachse oder radial beabstandet zu der Schwenkachse positioniert. Die beschriebene Ausgestaltung bildet eine mechanische Überlastsicherung, da der Hebelfortsatz bei Aufbringung eines gegenläufigen Drehmomentes auf das Schließteil im Bereich der Exzenterscheibe ausweichen kann, so dass keine Schädigung oder Beeinträchtigung der Steuerkinematik auftreten kann.

In weiterer Ausgestaltung der Erfindung greift an dem Schließteil ein Steuerschieber an, der durch die Exzenterscheibe beaufschlagt ist. Der Steuerschieber ist ein formstabiles, zug- und druckfestes Bauteil, das vorzugsweise linearbeweglich gelagert ist.

In weiterer Ausgestaltung der Erfindung weist der Steuerschieber einen Auflagekopf auf, der an dem Außenumfang der Exzenterscheibe anliegt. Der Auflagekopf weist eine Gleitfläche auf, die relativ zu dem Außenumfang der Exzenterscheibe einen geringen Gleitreibungskoeffizienten besitzt.

In weiterer Ausgestaltung der Erfindung ist der Steuerschieber in Fahrzeughochrichtung ausgerichtet und greift seitlich an dem Schließteil an. Der Auflagekopf des Steuerschiebers befindet sich demzufolge an einem unteren Stirnendbereich des Steuerschiebers. Durch die Ausrichtung in Fahrzeughochrichtung wird der Steuerschieber zwangsläufig bereits durch sein Eigengewicht mit seinem Auflagekopf gegen den Außenumfang der Exzenterscheibe gedrückt. Die Formulierung "in Fahrzeughochrichtung" bedeutet, dass die Haupterstreckungsrichtung des Steuerschiebers in Fahrzeughochrichtung ausgerichtet ist. Zusätzliche Neigungen in Fahrzeugquerrichtung und/oder in Fahrzeuglängsrichtung zwischen 1° und 20° sind von der Formulierung "in Fahrzeughochrichtung" umfasst.

In weiterer Ausgestaltung der Erfindung ist dem Steuerschieber eine Federeinrichtung zugeordnet, die den Steuerschieber permanent gegen den Außenumfang der Exzenterscheibe drückt. Diese Ausgestaltung ist vorteilhaft, um eine permanente Anlage des Steuerschiebers an der Exzenterscheibe auch im Fahrbetrieb des Kraftfahrzeugs zu ermöglichen, d. h. auch bei Rüttel- oder Schlagbewegungen des Fahrwerks des Kraftfahrzeugs.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in einem Ausschnitt eine Seitentür eines Kraftfahrzeugs mit einer Ausführungsform einer erfindungsgemäßen Beschattungsvorrichtung,
- Fig. 2: schematisch einen Ausschnitt der Beschattungsvorrichtung nach Fig. 1,
- Fig. 3: schematisch in zu Fig. 2 gegenüberliegender Ansicht die Beschattungsvorrichtung nach Fig. 2 in einem Öffnungszustand eines Schließteils,
- Fig. 4: schematisch die Beschattungsvorrichtung nach Fig. 3 in einer Schließstellung des Schließteils,
- Fig. 5: schematisch in einer Schnittdarstellung einen Ausschnitt einer weiteren Ausführungsform einer erfindungsgemäßen Beschattungsvorrichtung,
- Fig. 6: schematisch einen Ausschnitt der Beschattungsvorrichtung nach Fig. 5 in einem Blickwinkel von oben relativ zur Fig. 5,
- Fig. 7: schematisch eine weitere Ausführungsform einer erfindungsgemäßen Beschattungsvorrichtung ähnlich Fig. 5 und
- Fig. 8: die Beschattungsvorrichtung nach Fig. 7 mit Darstellung einer entsprechenden Überlastsicherung für das Schließteil.

Ein Personenkraftwagen ist viertürig gestaltet und weist zwei Fond-Seitentüren auf, die jeweils mit einer nachfolgend näher beschriebenen Beschattungsvorrichtung versehen sind. Nachfolgend wird lediglich die in Fahrtrichtung linke Fond-Seitentür näher beschrieben, für die gegenüberliegende Fond-Seitentür gilt das nachfolgend Gesagte analog.

Die Fond-Seitentür weist eine Seitenscheibe 2 auf, die durch ein flexibles Beschattungsgebilde beschattet werden kann. Das Beschattungsgebilde ist als Rollobahn aus einem textilen Web- oder Maschenwarenmaterial, insbesondere aus einem Gewirke, gestaltet. Die Rollobahn ist auf einer nicht dargestellten Wickelwelle auf- und abwickelbar gehalten. Die Wickelwelle ist in einem als Kassettengehäuse 4 gestalteten Aufnahmebereich 4, 6 drehbar gelagert. Der Aufnahmebereich 4, 6 ist fahrzeuginnenraumseitig im Bereich der Seitentür unterhalb der Scheibe 2 an einem innenseitigen Türstrukturteil 1 türfest befestigt. Ein unterer Randbereich einer Aussparung der Seitentür für die Scheibe 2 bildet eine Türbrüstung. Unterhalb der Türbrüstung ist der Aufnahmebereich 4, 6 angeordnet. Der Aufnahmebereich 4, 6 ist über seine gesamte Länge - in Fahrzeuglängsrichtung gesehen - in Fahrzeughochrichtung nach oben offen und bildet einen nicht näher bezeichneten Durchtritt für das Beschattungsgebilde nach oben. Der Durchtritt ist wenigstens über eine Breite des Beschattungsgebildes durchgängig offen gestaltet.

Der Aufnahmebereich 6 ist durch entsprechende Wandungen des Kassettengehäuses 4 umschlossen. Entsprechende Wandungsbereiche des Kassettengehäuses 4 bilden auch entsprechende Begrenzungen des Durchtrittes.

Das Beschattungsgebilde ist zwischen einer auf der Wickelwelle aufgewickelten Ruheposition und einer im Wesentlichen in Fahrzeughochrichtung nach oben ausgezogenen und die Scheibe 2 fahrzeuginnenraumseitig überdeckenden Beschattungsposition verlagerbar. Um das Beschattungsgebilde zwischen der Ruheposition und der Beschattungsposition verlagern zu können, weist das Beschattungsgebilde an seinem in Auszugrichtung vorderen Stirnendbereich ein formstabiles Auszugprofil auf, das in seitlichen Führungsschienen 3 entlang der Scheibe 2 im Wesentlichen in Fahrzeughochrichtung parallel verlagerbar ist. Die seitlichen Führungsschienen 3 flankieren die Scheibe 2 an ihren gegenüberliegenden, seitlichen Randbereichen und sind mit entsprechenden seitlichen Türrahmenabschnitten türfest verbunden.

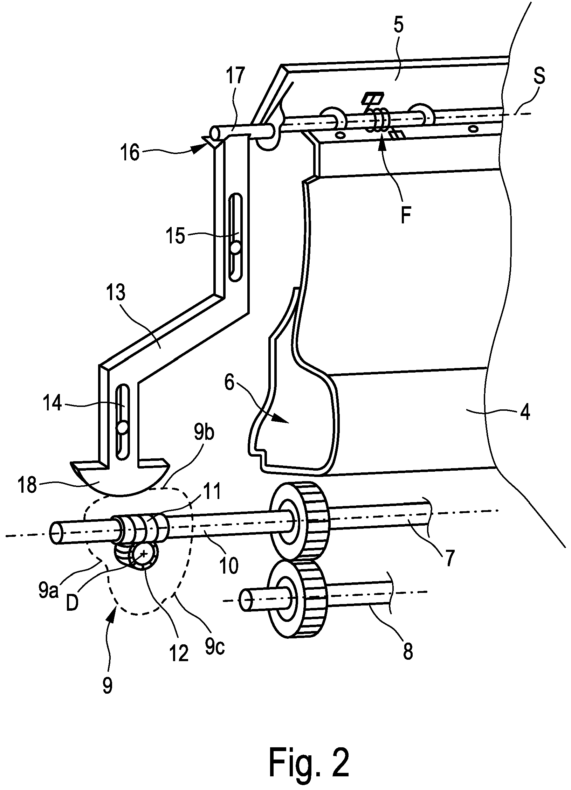

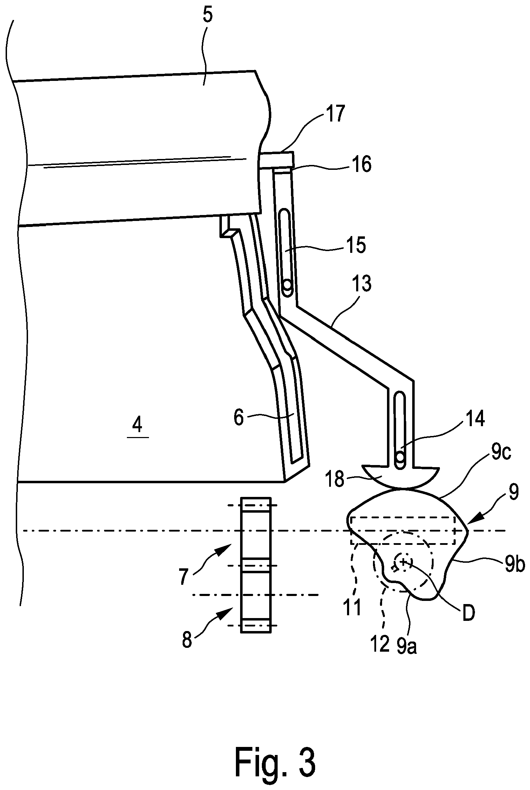

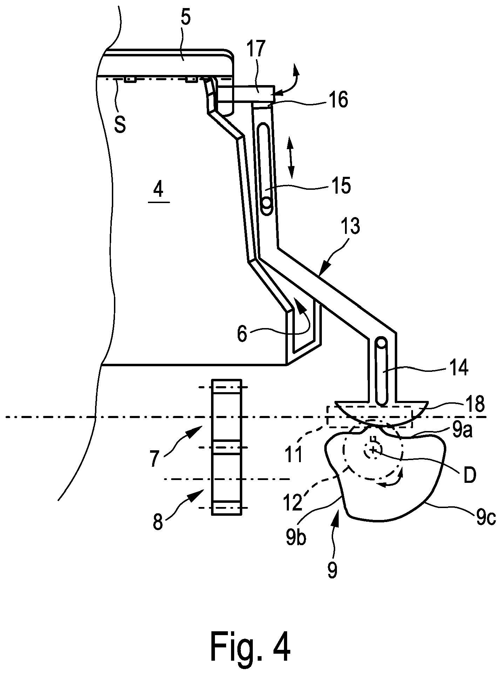

Zur Verlagerung des Auszugprofils zwischen der Ruhestellung des Beschattungsgebildes und der Beschattungsstellung des Beschattungsgebildes längs der Führungsschienen 3 ist ein Antriebssystem vorgesehen, dass teilweise anhand der Fig. 2 bis 4 dargestellt ist. Das Antriebssystem weist zwei flexible Antriebsübertragungsstränge auf, die in den seitlichen Führungsschienen 3 linearbeweglich geführt sind und die mit jeweils einem Mitnehmer fest verbunden sind, der jeweils einer Stirnseite des Auszugprofils zugeordnet ist. Die Antriebsübertragungsstränge sind beim dargestellten Ausführungsbeispiel als flexible Gewindesteigungskabel ausgeführt. Bei einem nicht dargestellten Ausführungsbeispiel der Erfindung sind statt flexibler Gewindesteigungskabel flexible Zahnstangen vorgesehen.

Zum Antrieb der Antriebsübertragungsstränge ist ein nicht dargestellter, elektrischer Antriebsmotor vorgesehen. Der Antriebsmotor treibt über eine flexible Antriebswelle 8 und ein nicht näher bezeichnetes Zahnradgetriebe eine Synchronwelle 7 an, auf der zwei Zahnräder drehfest angeordnet sind, die die beiden Antriebsübertragungsstränge in den gegenüberliegenden Führungsschienen 3 synchron antreiben. Am dargestellten Ausführungsbeispiel ist die Synchronwelle 7 außerhalb des Kassettengehäuses 4 angeordnet und parallel zu einer Drehachse der Wickelwelle ausgerichtet, die innerhalb des Aufnahmebereichs 6 des Kassettengehäuses 4 angeordnet ist. Die Wickelwelle selbst ist ebenfalls über wenigstens ein weiteres Zahnrad des Zahnradgetriebes angetrieben, das durch die flexible Antriebswelle 8 des elektrischen Antriebsmotors beaufschlagt wird. Bei der erfindungsgemäßen Beschattungsvorrichtung sind demzufolge sowohl die Wickelwelle als auch das Auszugprofil angetrieben. Um eine permanente Straffung des flexiblen Beschattungsgebildes zu gewährleisten, ist in der Wickelwelle eine Federvorspanneinrichtung integriert, die auf das Beschattungsgebilde eine permanente Vorspannung ausübt, die jedoch gemeinsam mit der Wickelwelle durch das Antriebssystem mitgedreht wird.

Der Durchtritt oberhalb des Aufnahmebereichs 6 des Kassettengehäuses 4 ist im Bereich der Türbrüstung durch ein Schließteil 5 verschließbar, das als schwenkbewegliche, formstabile Klappe ausgeführt ist. Das Schließteil 5 ist durch wenigstens eine Federeinheit F (Fig. 2) permanent in Schließrichtung drehmomentbeaufschlagt, wobei die Federeinheit F beim dargestellten Ausführungsbeispiel als Schenkelfeder ausgeführt ist, die koaxial zu einer Schwenkachse S des Schließteiles 5 positioniert ist und das gewünschte Drehmoment in Schließrichtung auf das Schließteil 5 ausübt.

In der Ruhestellung des Auszugprofils und des Beschattungsgebildes befindet sich das Schließteil 5 in seiner Schließstellung. Um das Schließteil 5 abhängig von einer Verlagerungsbewegung des Auszugprofils und des Beschattungsgebildes öffnen und schließen zu können, ist dem Schließteil 5 eine nachfolgend näher beschriebene Steuermechanik zugeordnet, die eine Zwangsführung des Schließteiles 5 bewirkt. Diese Zwangsführung ist abgeleitet von einer Drehung einer Übertragungswelle 10 des Antriebssystems. Bei der anhand der Fig. 2 bis 4 dargestellten Ausführungsform ist die Übertragungswelle 10 koaxial zur Synchronwelle 7 verlängert und drehfest mit der Synchronwelle 7 verbunden. Die Übertragungswelle 10 treibt eine Exzenterscheibe 9 an, die um eine Drehachse D drehbar gelagert ist, die quer zu einer Drehachse der Synchronwelle ausgerichtet ist. Beim dargestellten Ausführungsbeispiel erstreckt sich eine Drehachse der Synchronwelle 7 im Wesentlichen in Fahrzeuglängsrichtung, während die Drehachse D der Exzenterscheibe 9 sich im Wesentlichen in Fahrzeugquerrichtung erstreckt. Zur Drehmomentübertragung der Übertragungswelle 10 auf die Exzenterscheibe 9 ist beim dargestellten Ausführungsbeispiel ein Schneckentrieb 11, 12 vorgesehen, der eine Schneckenspindel 11 auf der Übertragungswelle 10 und ein Schneckenrad 12 koaxial zur Drehachse D der Exzenterscheibe vorsieht. Das Schneckenrad 12 ist drehfest mit der Exzenterscheibe 9 verbunden.

Die Exzenterscheibe 9 weist einen Außenumfang auf, der durch - in Umfangsrichtung der Exzenterscheibe 9 gesehen - unterschiedliche Randkonturen gebildet ist. Die Randkonturen bilden über den Umfang der Exzenterscheibe 9 verteilt insgesamt drei unterschiedliche Steuerkonturen 9a bis 9c, die jeweils einen veränderten radialen Abstand zur Drehachse D der Exzenterscheibe 9 definieren. Auf der jeweiligen Steuerkontur 9a bis 9c der Exzenterscheibe 9 stützt sich ein Steuerschieber 13 ab, der mit dem Schließteil 5 in Wirkverbindung ist. Hierzu weist das Schließteil 5 im Bereich einer Stirnseite einen Hebelfortsatz 17 auf, der radial versetzt zur Schwenkachse S parallel zu der Schwenkachse S von der Stirnseite des Schließteils 5 nach außen abragt und der fest mit dem Schließteil 5 verbunden ist. Der Hebelfortsatz 17 stützt sich in einer Gabel 16 des Steuerschiebers 13 ab. Die Gabel 16 ist an einem oberen Stirnendbereich des Steuerschiebers 13 vorgesehen. Der Steuerschieber 13 ist Z-artig abgewinkelt und ist mit Hilfe von zwei Linearführungen 14, 15 im Wesentlichen in Fahrzeughochrichtung längsverschiebbar gelagert. Wenigstens einer Linearführung 14, 15 ist eine nicht näher dargestellte Federrückstellung zugeordnet, die sicherstellt, dass der Steuerschieber 13 permanent gegen die Exzenterscheibe 9 nach unten gedrückt ist. Der Steuerschieber 13 weist an seinem zu der Gabel 16 gegenüberliegenden Stirnendbereich einen Auflagekopf 18 auf, der pilzförmig gestaltet ist und einen kreisbogenartig gekrümmten Stirnrandbereich aufweist. Der Auflagekopf 18 stützt sich mit diesem Stirnrandbereich auf der jeweiligen Steuerkontur 9a, 9b, 9c der Exzenterscheibe 9 gleitbeweglich ab. Da das Schließteil 5 durch die Federeinheit F permanent in Schließrichtung drehmomentbeaufschlagt ist, führt eine Verlagerung des Steuerschiebers 13 in Fahrzeughochrichtung nach oben oder nach unten zwangsläufig zu entsprechenden Öffnungs- oder Schließbewegungen des Schließteiles 5. Die Steuerkonturen 9a bis 9c sind derart ausgeführt, dass eine erste Steuerkontur 9a einer Schließstellung des Schließteiles 5, eine zweite Steuerkontur 9c einer vollständigen Öffnungsstellung des Schließteiles 5 und eine weitere Steuerkontur 9b einer teilweisen Öffnungsstellung des Schließteiles 5, nämlich einer Zwischenstellung des Schließteiles 5, entsprechen.

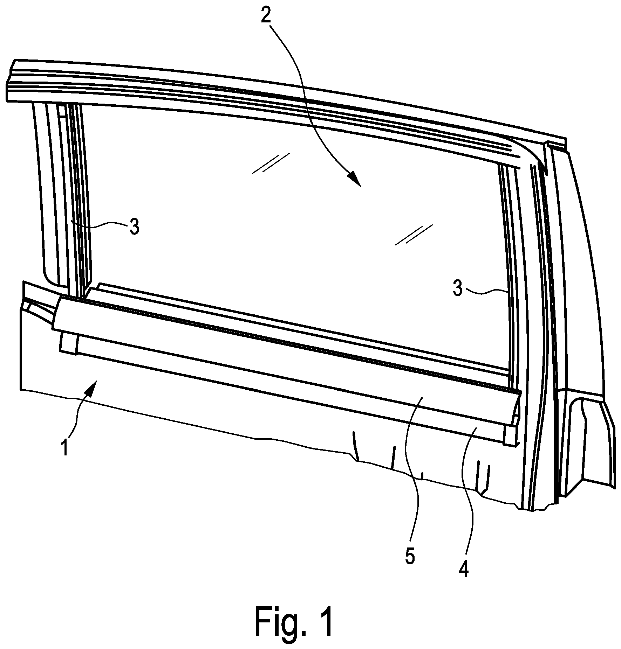

Die Funktionsweise der Beschattungsvorrichtung gemäß den Fig. 1 bis 4 ist wie folgt:
Soweit das Beschattungsgebilde und das Auszugprofil aus ihrer Ruhestellung innerhalb des Aufnahmebereichs 6 des Kassettengehäuses 4 durch den Durchtritt nach oben hin ausgefahren werden sollen, wird das Antriebssystem aktiviert. Hierdurch dreht die Antriebswelle 8 über die entsprechenden Getriebe die Synchronwelle 7 und bewegt die Antriebsübertragungsstränge. Gleichzeitig wird die Wickelwelle in Abwickelrichtung angetrieben und die Übertragungswelle 10 dreht die Exzenterscheibe 9, wodurch der Steuerschieber 13 nach oben verschoben wird und das Schließteil 5 öffnet. Das Auszugprofil und das Beschattungsgebilde können nach oben durch den Durchtritt ausfahren und entlang der Scheibe 2 nach oben verlagert werden. Spätestens dann, wenn das Auszugprofil seine obere Endstellung und demzufolge das Beschattungsgebilde seine Beschattungsstellung erreicht haben, ist die Exzenterscheibe 9 soweit verdreht, dass der Steuerschieber 13 sich auf der Steuerkontur 9b abstützt, die einer Zwischenstellung des Schließteiles 5 entspricht. Hierdurch ist das Schließteil 5 teilweise wieder geschlossen, wodurch der Durchtritt zumindest teilweise verdeckt ist und eine optisch ansprechende Kontur der Türbrüstung gewährleistet. Vorzugsweise ist der Schneckentrieb 11, 12, der durch die Übertragungswelle 10 beaufschlagt wird, derart ausgeführt, dass die Exzenterscheibe über den Verfahrweg des Auszugprofils und des Beschattungsgebildes maximal eine vollständige Drehung um 360° durchführt.

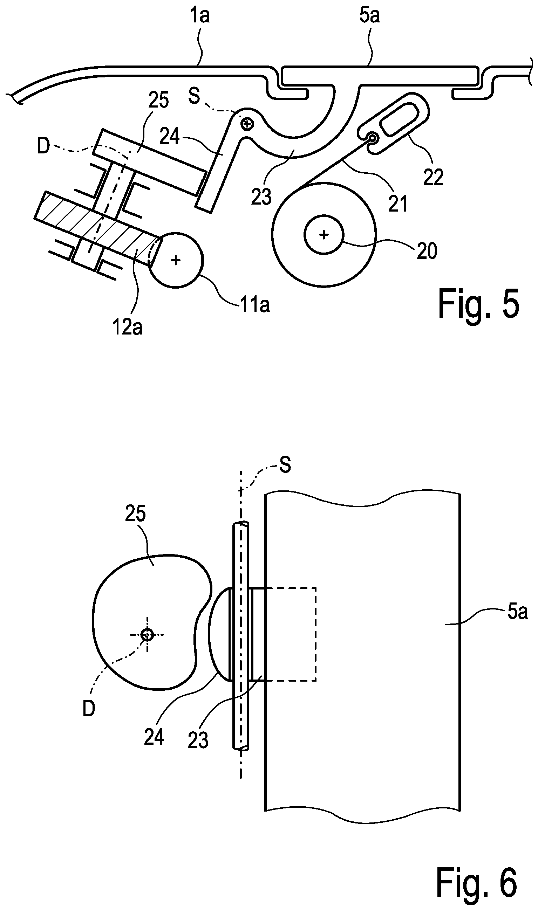

Die Ausführungsform nach den Fig. 5 bis 6 stellt ebenfalls eine Beschattungsvorrichtung für eine Fahrzeugscheibe eines Personenkraftwagens dar, deren Aufbau ähnlich zu der Beschattungsvorrichtung nach den Fig. 1 bis 4 ist. Die Beschattungsvorrichtung nach den Fig. 5 und 6 dient jedoch zur Beschattung einer Heckscheibe des Personenkraftwagens. Das entsprechende innenseitige "Türstrukturteil", das ein Innenraumstrukturteil 1a bildet, wird durch eine Hutablage unterhalb der Heckscheibe des Personenkraftwagens gebildet. In dem Innenraumstrukturteil 1a ist ein nicht näher bezeichneter Durchtritt vorgesehen, der durch ein Schließteil 5a verschließbar oder freigebbar ist.

Auch bei der Ausführungsform nach den Fig. 5 und 6 ist das Schließteil 5 zum Verschließen eines Durchtritts im Bereich des innenseitigen Innenraumstrukturteiles 1a vorgesehen, das klappenartig um eine unterhalb des Innenraumstrukturteiles 1a angeordnet und zumindest weitgehend in Fahrzeuglängsrichtung erstreckte Schwenkachse S schwenkbeweglich gelagert ist. Das Schließteil 5a dient zum Freigeben oder Verschließen des Durchtrittes, durch den hindurch ein Auszugprofil 22 eines flexiblen Flächengebildes in Form eines Beschattungsgebildes 21 von unterhalb des Innenraumstrukturteiles 1a her ausfahrbar oder unter dieses wieder einfahrbar ist. Das Beschattungsgebilde 21 ist auf einer Wickelwelle 20 auf- und abwickelbar gehalten. Die Wickelwelle 20 ist unterhalb des Innenraumstrukturteiles 1a türseitig drehbar gelagert. Zum Verlagern des Auszugprofiles 22 und des Beschattungsgebildes 21 zwischen einer Ruhestellung (in Fig. 5 gezeigt) und einer ausgefahrenen Funktionsstellung zur Beschattung der Heckscheibe des Personenkraftwagens ist ein Antriebssystem vorgesehen, das dem zuvor anhand der Fig. 1 bis 4 beschriebenen Antriebssystem entspricht.

Das Auszugprofil 22 ist an gegenüberliegenden Seitenbereichen in fahrzeugfesten Führungsschienen geführt, die im Bereich entsprechender Verkleidungsteile für Karosseriesäulen vorgesehen sind, die die Heckscheibe auf gegenüberliegenden Seiten flankieren. Das Schließteil 5a ist mittels wenigstens eines Trägerarmes 23 um die Schwenkachse S schwenkbeweglich gelagert. Von dem wenigstens einen Trägerarm 23 ragt wenigstens ein Hebelfortsatz 24 einstückig ab. Der Hebelfortsatz 24 ragt in einer zu dem Trägerarm 23 unterschiedlichen Richtung von der Schwenkachse S sowie weg von einer Innenseite des Innenraumstrukturteiles 1a nach innen ab. Der Hebelfortsatz 24 steht direkt in Anlagekontakt mit einer Exzenterscheibe 25, die analog der Ausführungsform nach den Fig. 1 bis 4 mit unterschiedlichen Steuerkonturen an ihrem Umfang versehen ist. Die Exzenterscheibe 25 ist um eine Drehachse D drehbeweglich gelagert und drehfest mit einem Schneckenrad 12a verbunden, das durch eine Schnecke 11a angetrieben wird, die Teil des Antriebssystems ist. Die Schnecke 11a wird mittels eines Untersetzungsgetriebes durch das Antriebssystem für das Auszugprofil 22 und die Wickelwelle 20 angetrieben. Dabei ist das Untersetzungsverhältnis derart gestaltet, dass das Schneckenrad 12a und damit die Exzenterscheibe 25 maximal eine 360°-Umdrehung um die Drehachse D vollführen bei einem Verlagerungsweg des Auszugprofils 22 zwischen seiner Ruhestellung (Fig. 5) und einer ausgefahrenen Endstellung. Besonders bevorzugt ergibt sich zwischen einer Drehzahl der Wickelwelle 20 und einer Drehzahl des Schneckenrades 12a ein Untersetzungsverhältnis von 1:7, d. h. das Schneckenrad 12a dreht sieben Mal langsamer als die Wickelwelle 20. In nicht näher dargestellter Weise wird auf das Schließteil 5a permanent ein Drehmoment in Schließrichtung ausgeübt, so dass der Hebelfortsatz 24 zwangsläufig permanent gegen die entsprechenden Steuerkonturen der Exzenterscheibe 25 gedrückt wird.

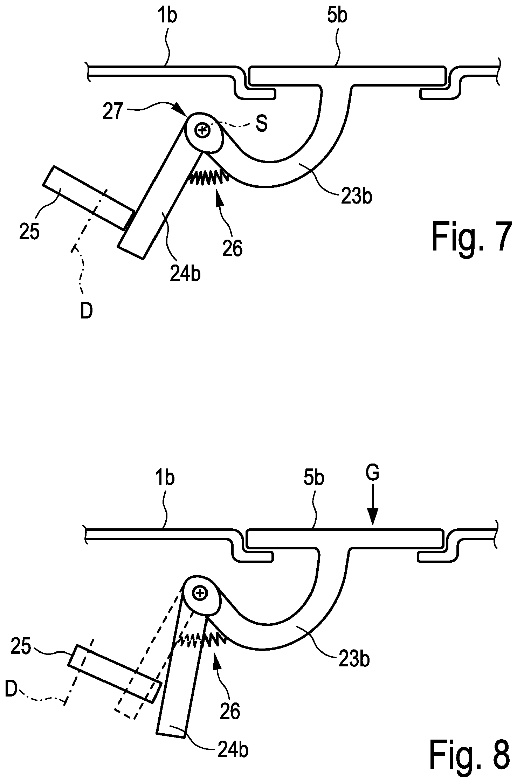

Die Beschattungsvorrichtung gemäß den Fig. 7 und 8 entspricht im Wesentlichen der Beschattungsvorrichtung nach den Fig. 5 und 6. Zur Vermeidung von Wiederholungen wird daher auf die Ausführungen zu den Fig. 5 und 6 verwiesen. Funktionsgleiche Teile oder Abschnitte sind mit gleichen Bezugszeichen, teilweise unter Hinzuführung des Buchstabens b, versehen. Nachfolgend wird zur Vermeidung von Wiederholungen lediglich auf die Unterschiede der Ausführungsform gemäß den Fig. 7 und 8 eingegangen.

Wesentlicher Unterschied bei der Ausführungsform nach den Fig. 7 und 8 ist es, dass dem Schließteil 5b eine Überlastsicherung zugeordnet ist. Hierzu ist der Hebelfortsatz 24b von dem Trägerarm 23b getrennt schwenkbeweglich um die Schwenkachse S gelagert. Ein Anschlag 27 definiert eine lediglich begrenzte Schwenkbeweglichkeit des Hebelfortsatzes 24b relativ zu dem Trägerarm 23b. In normaler Betriebsstellung wird der Hebelfortsatz 24b permanent gegen den Endanschlag 27 des Trägerarmes 23b gedrückt gehalten durch eine Federeinrichtung 26, die bei der Ausführungsform nach den Fig. 7 und 8 als Druckfeder gestaltet ist. Die Federeinrichtung 26 drückt in der Darstellung gemäß den Fig. 7 und 8 den Hebelfortsatz 24b koaxial zur Schwenkachse S von dem Trägerarm 23b weg gegen den Anschlag 27 des Trägerarmes 23b. Dadurch wird der Hebelfortsatz 24b relativ zu dem Trägerarm 23b etwa orthogonal kraftbegrenzt gehalten. Die Federeinrichtung 26 ist derart ausgelegt, dass sich der Hebelfortsatz 24b relativ zu dem Trägerarm 23b bei normalen Funktionsbelastungen der Beschattungsvorrichtung wie ein starrer Fortsatz des Trägerarmes 23b verhält. Wenn gemäß Fig. 8 die Exzenterscheibe 25 den Hebelfortsatz 24b im Gegenuhrzeigersinn verlagert, öffnet sich demzufolge zwangsläufig das Schließteil 5b. Sobald jedoch auf das Schließteil 5b von außen her eine unvorhergesehene Gegenkraft G ausgeübt wird, die größer ist als die Rückstellkraft der Federeinrichtung 26, wird das Schließteil 5b in die Schließstellung überführt und der starre Winkel zwischen dem Hebelfortsatz 24b und dem Trägerarm 23b wird aufgelöst (siehe Fig. 8). Gestrichelt ist in Fig. 8 die Ausgangslage und demzufolge der ursprüngliche Ausgangswinkel des Hebelfortsatzes 24b relativ zum Trägerarm 23b dargestellt. Durch die so gebildete Überlastsicherung wird bei entsprechenden Belastungen auf das Schließteil 5b von außen her eine Beschädigung oder eine Fehlfunktion der Exzenterscheibe 25 und demzufolge der Steuerkinematik des Antriebssystems vermieden.

## Patentansprüche

1. Beschattungsvorrichtung für eine Scheibe (2) eines Kraftfahrzeugs mit einem flexiblen Beschattungsgebilde, das auf einer Wickelwelle auf- und abwickelbar gehalten ist, die in einem fahrzeugfesten Aufnahmebereich (6) angeordnet ist, dem ein Durchtritt zugeordnet ist, durch den hindurch das flexible Beschattungsgebilde in eine Beschattungsposition ausziehbar oder in eine Ruheposition aufwickelbar ist, wobei der Durchtritt durch ein schwenkbeweglich gelagertes Schließteil (5, 5a, 5b) verschließbar oder freigebbar ist, wobei das Beschattungsgebilde an seinem in Auszugrichtung vorderen Stirnendbereich mit einem formstabilen Auszugprofil versehen ist, das mit Hilfe wenigstens eines Antriebsübertragungsmittels eines Antriebssystems entlang der Scheibe (2) verfahrbar ist, um das Beschattungsgebilde zwischen der Ruheposition und der Beschattungsposition zu verlagern, und wobei das Schließteil (5, 5a, 5b) mittels einer Steuermechanik zwischen einer Schließstellung und wenigstens einer Öffnungsstellung abhängig von einer Verfahrbewegung des Auszugprofils zwangsgesteuert ist, wobei die Steuermechanik eine von dem Antriebssystem abgeleitete Steuerkinematik aufweist, die eine drehbare Exzenterscheibe (9, 25) aufweist, die mit dem Schließteil (5, 5a, 5b) in Wirkverbindung ist, und die an ihrem Außenumfang mit unterschiedlichen Steuerkonturen (9a bis 9c) zur Abbildung der Schließstellung und der wenigstens einen Öffnungsstellung des Schließteils (5, 5a, 5b) abhängig von einer Drehstellung der Exzenterscheibe (9, 25) versehen ist, **dadurch gekennzeichnet, dass** drei unterschiedliche Steuerkonturen (9a bis 9c) vorgesehen sind, wobei eine erste Steuerkontur (9a) der Schließstellung, eine zweite Steuerkontur (9c) einer vollständigen Öffnungsstellung und eine weitere Steuerkontur (9b) einer teilweisen Öffnungsstellung des Schließteils (5) entsprechen.

2. Beschattungsvorrichtung nach Anspruch 1, **dadurch gekennzeichnet, dass** die Exzenterscheibe (9, 25) mittels eines Schneckentriebs (11, 12; 11a, 12a) mit einer Übertragungswelle (10) des Antriebssystems verbunden ist.

3. Beschattungsvorrichtung nach Anspruch 1 oder 2, **dadurch gekennzeichnet, dass** das Schließteil (5, 5a, 5b) mittels einer Federeinheit (F) permanent in Schließrichtung drehmomentbeaufschlagt ist.

4. Beschattungsvorrichtung nach einem der vorhergehenden Ansprüche, **dadurch gekennzeichnet, dass** das Antriebssystem die Wickelwelle und das wenigstens eine Antriebsübertragungsmittel für das Auszugprofil antreibt.

5. Beschattungsvorrichtung nach einem der vorhergehenden Ansprüche, **dadurch gekennzeichnet, dass** die Steuerkonturen (9a bis 9c) für die beiden Öffnungsstellungen und die Schließstellung unterschiedliche radiale Abstände zu einer Drehachse (D) der Exzenterscheibe (9, 25) aufweisen.

6. Beschattungsvorrichtung nach einem der vorhergehenden Ansprüche, **dadurch gekennzeichnet, dass** die Exzenterscheibe (25) an einem mit dem Schließteil (5a, 5b) verbundenen Hebelfortsatz (24, 24b) angreift.

7. Beschattungsvorrichtung nach Anspruch 6, **dadurch gekennzeichnet, dass** der Hebelfortsatz (24b) mit dem Schließteil (5b) mittels einer Überlastsicherung (26, 27) verbunden ist.

8. Beschattungsvorrichtung nach Anspruch 7, **dadurch gekennzeichnet, dass** der Hebelfortsatz (24b) relativ zu dem Schließteil (5b) koaxial zu der Schwenkachse des Schließteiles (5b) begrenzt schwenkbeweglich gelagert ist, und dass eine Federeinrichtung (26) vorgesehen ist, die den Hebelfortsatz (24b) relativ zu dem Schließteil (5b) in einer definierten Funktionslage sichert.

9. Beschattungsvorrichtung nach einem der vorhergehenden Ansprüche, **dadurch gekennzeichnet, dass** an dem Schließteil (5, 5a, 5b) ein Steuerschieber (13) angreift, der durch die Exzenterscheibe (9, 25) beaufschlagt ist.

10. Beschattungsvorrichtung nach Anspruch 9, **dadurch gekennzeichnet, dass** der Steuerschieber (13) einen Auflagekopf (18) aufweist, der an dem Außenumfang der Exzenterscheibe (9, 25) anliegt.

11. Beschattungsvorrichtung nach Anspruch 9 oder 10, **dadurch gekennzeichnet, dass** der Steuerschieber (13) in Fahrzeughochrichtung ausgerichtet ist und seitlich an dem Schließteil (5, 5a, 5b) angreift.

12. Beschattungsvorrichtung nach einem der Ansprüche 9 bis 11, **dadurch gekennzeichnet, dass** dem Steuerschieber (13) eine Federeinrichtung zugeordnet ist, die den Steuerschieber (13) permanent gegen den Außenumfang der Exzenterscheibe (9, 25) drückt.

## Claims

1. Shading device for a window (2) of a motor vehicle, with a flexible shading structure which is held on a winding shaft so as to be able to be wound up and unwound, which winding shaft is arranged in a vehicle-mounted receiving region (6) which is assigned a passage, through which passage the flexible shading structure can be pulled out into a shading position or can be wound up into an inoperative position, wherein the passage can be closed or can be opened up by means of a pivotably mounted closing part (5, 5a, 5b), wherein the shading structure is provided at its end region in front in the pull-out direction with a dimensionally stable pull-out profile which is movable along the window (2) with the aid of at least one drive transmission means of a drive system in order to shift the shading structure between the inoperative position and the shading position, and wherein the closing part (5, 5a, 5b) is forcibly controlled by means of a control mechanism between a closed position and at least one opening position depending on a shifting movement of the pull-out profile, wherein the control mechanism has control kinematics which are derived from the drive system and have a rotatable eccentric disk (9, 25) which is operatively connected to the closing part (5, 5a, 5b) and the outer circumference of which is provided with different control contours (9a to 9c) for reproducing the closed position and the at least one opening position of the closing part (5, 5a, 5b) depending on a rotational position of the eccentric disk (9, 25),
**characterized in that**
three different control contours (9a to 9c) are provided, wherein a first control contour (9a) corresponds to a closed position, a second control contour (9c) corresponds to a complete opening position, and a further control contour (9b) corresponds to a partial opening position of the closing part (5).

2. Shading device according to claim 1, **characterized in that** the eccentric disk (9, 25) is connected to a transmission shaft (10) of the drive system by means of a worm drive (11, 12; 11a, 12a).

3. Shading device according to claim 1 or 2, **characterized in that** the closing part (5, 5a, 5b) is permanently forced, on the basis of torque, in the closing direction by means of a spring unit (F).

4. Shading device according to any one of the preceding claims, **characterized in that** the drive system drives the winding shaft and the at least one drive transmission means for the pull-out profile.

5. Shading device according to any one of the preceding claims, **characterized in that** the control contours (9a to 9c) for the two opening positions and the closed position are at different radial distances from an axis of rotation (D) of the eccentric disk (9, 25).

6. Shading device according to any one of the preceding claims, **characterized in that** the eccentric disk (25) acts on a lever extension (24, 24b) which is connected to the closing part (5a, 5b).

7. Shading device according to claim 6, **characterized in that** the lever extension (24b) is connected to the closing part (5b) by means of an overload protection device (26, 27).

8. Shading device according to claim 7, **characterized in that** the lever extension (24b) is mounted relative to the closing part (5b) so as to be pivotable to a limited extent coaxially with respect to the pivot axis of the closing part (5b), and **in that** a spring device (26) is provided which secures the lever extension (24b) in a defined functional position relative to the closing part (5b).

9. Shading device according to any one of the preceding claims, **characterized in that** a control slide (13) which is acted upon by the eccentric disk (9, 25) engages on the closing part (5, 5a, 5b).

10. Shading device according to claim 9, **characterized in that** the control slide (13) has a supporting head (18) which lies against the outer circumference of the eccentric disk (9, 25).

11. Shading device according to claim 9 or 10, **characterized in that** the control slide (13) is oriented in the vertical direction of the vehicle and acts laterally on the closing part (5, 5a, 5b).

12. Shading device according to any one of the claims 9 to 11, **characterized in that** the control slide (13) is assigned a spring device which permanently presses the control slide (13) against the outer circumference of the eccentric disk (9, 25).

## Revendications

1. Dispositif d'ombrage pour une vitre (2) de véhicule automobile avec une structure d'ombrage flexible, retenue sur un arbre d'enroulement de manière enroulable et déroulable, l'arbre d'enroulement étant disposé dans un espace de logement (6) fixé au véhicule et un passage étant associé à l'espace de logement, au travers du passage la structure d'ombrage flexible peut être tirée vers une position d'ombrage ou peut être enroulée vers une position de repos, dans lequel le passage peut être fermé ou exposé par une pièce de fermeture (5, 5a, 5b) montée pivotante, dans lequel la structure d'ombrage est pourvue d'un profilé de tirage dimensionnellement stable sur sa face d'extrémité frontale avant dans la direction de tirage, le profilé de tirage étant déplaçable par le biais d'au moins un moyen de transmission d'entraînement d'un système d'entraînement le long de la vitre (2) afin de déplacer la structure d'ombrage entre une position de repos et la position d'ombrage, et dans lequel la pièce de fermeture (5, 5a, 5b) est contrôlée par commande forcée au moyen d'un mécanisme de commande entre une position de fermeture et au moins une position d'ouverture en fonction d'un mouvement de déplacement du profilé de tirage, dans lequel le mécanisme de commande présente une cinématique de commande dérivée du système d'entraînement comportant un disque excentrique rotatif (9, 25) en liaison active avec la pièce de fermeture (5, 5a, 5b) et pourvue sur sa circonférence extérieure de contours de commande différents (9a à 9c) pour la représentation de la position de fermeture et de l'au moins une position d'ouverture de la pièce de fermeture (5, 5a, 5b) en fonction d'une position de rotation du disque excentrique (9, 25),
**caractérisé en ce que**
trois contours de commande différents (9a à 9c) sont prévus, dans lequel un premier contour de commande (9a) correspond à la position de fermeture, un deuxième contour de commande (9c) correspond à une position d'ouverture complète et un autre contour de commande (9b) correspond à une position d'ouverture partielle de la pièce de fermeture (5).

2. Dispositif d'ombrage selon la revendication 1, **caractérisé en ce que** le disque excentrique (9, 25) est relié à un arbre de transmission (10) du système d'entraînement par une transmission à vis sans fin (11, 12 ; 11a, 12a).

3. Dispositif d'ombrage selon la revendication 1 ou 2, **caractérisé en ce qu'**un moment de force est appliqué en permanence à la pièce de fermeture (5, 5a, 5b) par une unité de ressort (F) dans la direction de fermeture.

4. Dispositif d'ombrage selon l'une quelconque des revendications précédentes, **caractérisé en ce que** le système d'entraînement entraîne l'arbre d'enroulement et l'au moins un moyen de transmission d'entraînement pour le profilé de tirage.

5. Dispositif d'ombrage selon l'une quelconque des revendications précédentes, **caractérisé en ce que** les contours de commande (9a à 9c) présentent des distances radiales différentes d'un arbre de rotation (D) du disque excentrique (9, 25) pour les deux positions d'ouverture et la position de fermeture.

6. Dispositif d'ombrage selon l'une quelconque des revendications précédentes, **caractérisé en ce que** le disque excentrique (25) vient en prise avec un prolongement de levier (24, 24b) relié à la pièce de fermeture (5a, 5b).

7. Dispositif d'ombrage selon la revendication 6, **caractérisé en ce que** le prolongement de levier (24b) est relié à la pièce de fermeture (5b) par un dispositif de protection contre surcharge (26, 27).

8. Dispositif d'ombrage selon la revendication 7, **caractérisé en ce que** le prolongement de levier (24b) est pivotant dans une mesure limitée par rapport à la pièce de fermeture (5b) coaxialement à l'axe de pivotement de la pièce de fermeture (5b), et **en ce qu'**un dispositif de ressort (26) est prévue retenant le prolongement de levier (24b) par rapport à la pièce de fermeture (5b) dans une position de fonctionnement définie.

9. Dispositif d'ombrage selon l'une quelconque des revendications précédentes, **caractérisé en ce qu'**un coulisseau de commande (13) vient en prise avec la pièce de fermeture (5, 5a, 5b), cependant le disque excentrique (9, 25) agissant sur le coulisseau.

10. Dispositif d'ombrage selon la revendication 9, **caractérisé en ce que** le coulisseau de commande (13) présente une tête de support (18) restant sur la circonférence extérieure du disque excentrique (9, 25).

11. Dispositif d'ombrage selon la revendication 9 ou 10, **caractérisé en ce que** le coulisseau de commande (13) est orienté vers la direction verticale du véhicule et vient en prise avec la pièce de fermeture (5, 5a, 5b) latéralement.

12. Dispositif d'ombrage selon l'une quelconque des revendications 9 à 11, **caractérisé en ce que** le coulisseau de commande (13) est associé à un dispositif de ressort pressant le coulisseau de commande (13) en permanence contre la circonférence extérieure du disque excentrique (9, 25).
